# EUROPEAN PATENT APPLICATION

(11) **EP 3 242 526 A1**
(43) Date of publication of application: **08.11.2017**
(21) Application number: 14909536.6
(22) Date of filing: 31.12.2014
(51) Int. Cl.: H04W 72/14

(54) **METHOD AND APPARATUS FOR GENERATING BUFFER STATUS REPORT, AND COMMUNICATION SYSTEM**

(71) Applicant: Fujitsu Limited, Kawasaki-shi, Kanagawa 211-8588 (JP)
(72) Inventor: XU, Haibo, Beijing 100025 (CN); WU, Lianhai, Beijing 100025 (CN)
(74) Representative: Haseltine Lake LLP
(86) International application number: PCT/CN2014/096014
(87) International publication number: WO 2016/106729

(57) **Abstract**

This application provides a method and apparatus for generating a buffer status report and a communication system. Wherein, the apparatus is applicable to user equipment and includes: a first determining unit configured to determine the transmission time interval for transmitting a buffer status report of a sidelink; a judging unit configured to judge whether there exists remaining configured sidelink grant; a second determining unit configured to determine the sidelink destination and its buffer size needing to be contained in the buffer status report according to a judgment result of the judging unit; and a generating unit configured to generate the buffer status report according to the sidelink destination and its buffer size needing to be contained in the buffer status report determined by the second determining unit. With this application, a problem that a buffer status of a sidelink cannot be correctly reflected in a ProSe BSR by UE in reporting the ProSe BSR may be solved.

## Description

### Field

This disclosure relates to the field of communications, and in particular to a method and apparatus for generating a buffer status report and a communication system.

### Background

Currently, in a long-term evolution (LTE) system, communication between terminal devices needs to be performed via a radio access network and a core network. As appearance of demands for many new traffics, and at the same time, in order to reduce a load of a network and achieve transfer of the load of the network, the communication between terminal devices has gradually become a new direction for studies. When a distance between two terminal devices is sufficiently near, the terminal devices may discover existence of the counterpart, hence, direct communication between devices may be performed under control of a base station.

In order to realize device to device communication, two types of air-interface resource allocation schemes, mode 1 and mode 2, are defined in an LTE-A (LTE-advanced) system. In mode 1, in order to avoid affecting reporting of a buffer status report (BSR) directed to a traffic of a conventional infrastructural communication mode, a BSR mechanism directed to the device to device communication (which may be referred to as a ProSe BSR) is introduced, which mainly includes a triggering mechanism of a new BSR and an MAC signaling format and content of the BSR.

A concept of a sidelink control period (briefly referred to as an SC period) is defined in the device to device (D2D) communication mode, the SC period referring to a time period containing scheduling control and transmission of data to which it corresponds. For mode 1, a basic operational principle of data transmission of a transmitting end in the D2D communication is as follows.

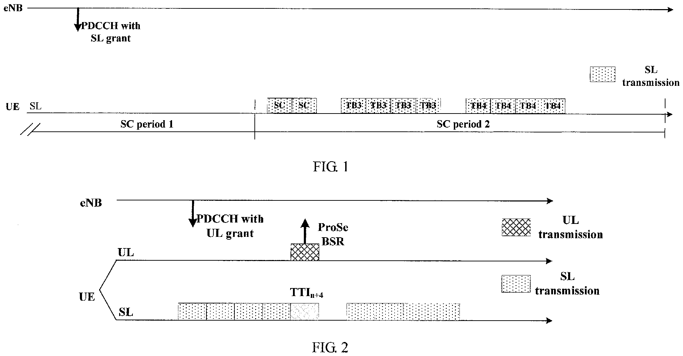

After determining data transmission of a certain D2D user equipment (UE), a base station transmits an SL grant (a sidelink grant) to the UE via a physical downlink control channel (PDCCH) scrambled by a sidelink radio network temporary identity (SL-RNTI), the SL grant containing time-frequency resource positions of (scheduling control) SC to be transmitted by the UE and time-frequency resource positions of data to be transmitted by the UE. A period of validity of the SL grant is an SC period, and an SC period to which it corresponds is a next SC period starting from 4ms after a subframe transmitting the SL grant. After receiving an SL grant, the UE will first transmit the SC twice at a resource position of the SC indicated by the SL grant within the SC period to which the SL grant corresponds, and then transmit transport blocks (TBs) at resource positions of data indicated by the SL grant; wherein, each TB will be transmitted for four times, and the number of TBs that can be transmitted within an SC period is dependent on the number of resources allocated in the SL grant. FIG. 1 is a schematic diagram of the transmission process.

It should be noted that the above description of the background is merely provided for clear and complete explanation of this disclosure and for easy understanding by those skilled in the art. And it should not be understood that the above technical solution is known to those skilled in the art as it is described in the background of this disclosure.

### Summary

However, when UE operates at an infrastructure-based communication mode and the D2D communication mode at the same time, the UE is unable to perform uplink data transmission and D2D data transmission at the same time at the same subframe. This means that within a transmission time interval (TTI), if the UE has an uplink grant (UL grant) for transmitting a ProSe BSR (a sidelink buffer status report), it is certain that the UE is unable to transmit a media access control-protocol data unit (MAC PDU) in a sidelink (SL, i.e. a link between devices in the D2D communication mode). If a buffer size of the ProSe BSR is determined according to a conventional method for determining a buffer size of a BSR in the infrastructural communication mode, that is, if the BSR needs to be reported within a TTI, what is reflected by a buffer size in the BSR is a buffer status after all MAC PDUs within the TTI are built, current realization of the UE is unable to determine the buffer size, as it is impossible for the UE to build an SL MAC PDU within the TTI for transmitting the ProSe BSR. As shown in detail in FIG. 2, as uplink transmission occurs at TTIₙ₊₄, an SL MAC PDU (a media access control-protocol data unit on sidelink) can not be built within the TTIₙ₊₄.

Furthermore, within the TTI for transmitting the ProSe BSR, in determining the number of ProSe destinations (destination or target of sidelink) contained in the reported ProSe BSR, if a TTI for transmitting the ProSe BSR is taken as a time point to judge which ProSe destination having data available for transmission, it is unable to report correctly to a base station ProSe destinations really having data available for transmission, since an SL grant is directed to an SC period, rather than a TTI. Likewise, in determining a buffer size in the ProSe BSR, if the buffer size is determined taking the TTI for transmitting the ProSe BSR as a time point, a buffer status is unable to be correctly reflected.

In order to solve the above problem, embodiments of this disclosure provide a method and apparatus for generating a buffer status report and a communication system, so as to overcome a defect that a buffer status of a sidelink is unable to be correctly reflected in a ProSe BSR when UE reports the ProSe BSR.

According to a first aspect of the embodiments of this disclosure, there is provided an apparatus for generating a buffer status report, applicable to UE, the apparatus including:
a first determining unit configured to determine the transmission time interval for transmitting a buffer status report of a sidelink;
a judging unit configured to judge whether there exists a remaining configured sidelink grant;
a second determining unit configured to determine the sidelink destination and its buffer size needing to be contained in the buffer status report according to a judgment result of the judging unit; and
a generating unit configured to generate the buffer status report according to the sidelink destination and its buffer size needing to be contained in the buffer status report determined by the second determining unit.

According to a second aspect of the embodiments of this disclosure, there is provided a method for generating a buffer status report, applicable to UE, the method including:
a transmission time interval for transmitting a buffer status report of a sidelink is determined;
whether there exists a remaining configured sidelink grant is judged;
a sidelink destination and its buffer size needing to be contained in the buffer status report is determined according to a judgment result; and
the buffer status report is generated according to the sidelink destination and its buffer size needing to be contained in the buffer status report.

According to a third aspect of the embodiments of this disclosure, there is provided UE, including the apparatus for generating a buffer status report as described above.

According to a fourth aspect of the embodiments of this disclosure, there is provided a communication system, including the UE as described above.

According to another aspect of the embodiments of this disclosure, there is provided a computer readable program code, which, when executed in an apparatus for generating a buffer status report or UE, will cause a computer unit to carry out the method for generating a buffer status report as described in the second aspect in the apparatus for generating a buffer status report or UE.

According to another aspect of the embodiments of this disclosure, there is provided a computer readable medium, including a computer readable program code, which will cause a computer unit to carry out the method for generating a buffer status report as described in the second aspect in an apparatus for generating a buffer status report or UE.

An advantage of the embodiments of this disclosure exists in that with the method, apparatus and system of the embodiments of this disclosure, in transmitting a ProSe BSR, the UE may reasonably determine ProSe destinations having data available for transmission and needing to be contained in the ProSe BSR; and at the same time, the UE may reasonably determine a buffer size of each ProSe destination contained in the ProSe BSR, thereby solving a problem that a buffer status of a sidelink cannot be correctly reflected in the ProSe BSR in reporting the ProSe BSR by the UE.

With reference to the following description and drawings, the particular embodiments of this disclosure are disclosed in detail, and the principle of this disclosure and the manners of use are indicated. It should be understood that the scope of the embodiments of this disclosure is not limited thereto. The embodiments of this disclosure contain many alternations, modifications and equivalents within the scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprises/comprising/includes/including" when used in this specification is taken to specify the presence of stated features, integers, steps or components but does not preclude the presence or addition of one or more other features, integers, steps, components or groups thereof.

### Brief Description of the Drawings

The drawings are included to provide further understanding of this disclosure, which constitute a part of the specification and illustrate the preferred embodiments of this disclosure, and are used for setting forth the principles of this disclosure together with the description. It is obvious that the accompanying drawings in the following description are some embodiments of this disclosure, and for those of ordinary skills in the art, other accompanying drawings may be obtained according to these accompanying drawings without making an inventive effort. In the drawings:
FIG. 1 is a schematic diagram of a data transmission in a sidelink;
FIG. 2 is a schematic diagram of collision between sidelink transmission and uplink transmission;
FIG. 3 is a flowchart of a method for generating a buffer status report of an embodiment;
FIGs. 4-13 are schematic diagrams of ten application scenarios of the method of the embodiment;
FIG. 14 is an overall flowchart of the method for generating a buffer status report of the embodiment;
FIG. 15 is a flowchart of an implementation of the method for generating a buffer status report of the embodiment;
FIG. 16 is a flowchart of another implementation of the method for generating a buffer status report of the embodiment;
FIG. 17 is a schematic diagram of a structure of an apparatus for generating a buffer status report of an embodiment;
FIGs. 18-23 are schematic diagrams of structures of multiple implementations of a second determining unit of the apparatus for generating a buffer status report of the embodiment;
FIG. 24 is a schematic diagram of a structure of the UE of an embodiment; and
FIG. 25 is a schematic diagram of a topology of a communication system of an embodiment.

### Detailed Description

These and further aspects and features of the present disclosure will be apparent with reference to the following description and attached drawings. In the description and drawings, particular embodiments of the disclosure have been disclosed in detail as being indicative of some of the ways in which the principles of the disclosure may be employed, but it is understood that the disclosure is not limited correspondingly in scope. Rather, the disclosure includes all changes, modifications and equivalents coming within the terms of the appended claims. The embodiments of this disclosure shall be described below with reference to the accompanying drawings. The embodiments are illustrative only, and are not intended to limit this disclosure.

### Embodiment 1

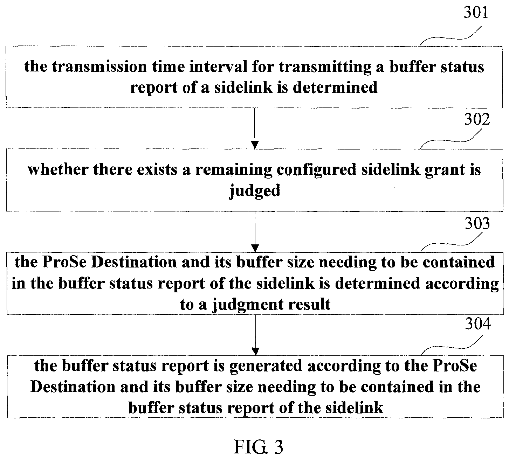

An embodiment of this disclosure provides a method for generating a buffer status report, applicable to UE. FIG. 3 is a flowchart of the method. Referring to FIG. 3, the method includes:
step 301: a transmission time interval for transmitting a buffer status report of a sidelink is determined;
step 302: whether there exists a remaining configured sidelink grant is judged;
step 303: a sidelink destination and its buffer size needing to be contained in the buffer status report is determined according to a judgment result of step 302; and
step 304: the buffer status report is generated according to the sidelink destination and its buffer size needing to be contained in the buffer status report of the sidelink.

In step 301, the UE first determines the transmission time interval (TTI) for transmitting the ProSe BSR (buffer status report of a sidelink), and the UE will transmit the ProSe BSR within the determined TTI. In this step, the UE may determine the TTI after receiving a PDCCH containing a UL grant transmitted by a base station, or may determine the TTI with reference to another policy. In this embodiment, after determining the TTI for transmitting the ProSe BSR according to step 301, the UE may determine the ProSe destination and its buffer size needing to be contained in the ProSe BSR according to steps 302 and 303, and generate the ProSe BSR according to step 304. Hence, it may transmit the ProSe BSR within the TTI determined in step 301.

In step 302, after determining the TTI for transmitting the ProSe BSR, the UE may judge whether there exists a remaining configured SL grant within or before the TTI. In this step, the UE may judge whether there exists a remaining configured SL grant for an SC period where the TTI for transmitting the ProSe BSR is located in, that is, judging whether there exists an SL grant for an SC period containing the TTI for transmitting the ProSe BSR; or may judge whether there exists a remaining configured SL grant for a subsequent SC period of the SC period where the TTI for transmitting the ProSe BSR is located in, that is, judging whether there exists an SL grant for a subsequent SC period of the SC period containing the TTI for transmitting the ProSe BSR; or may judge whether there exists a remaining configured SL grant for the SC period where the TTI for transmitting the ProSe BSR is located in and the subsequent SC period, that is, judging whether there exists an SL grant for the SC period containing the TTI for transmitting the ProSe BSR and the subsequent SC period.

In another implementation, if the SC period where the TTI for transmitting the ProSe BSR is located in has a configured SL grant and the configured SL grant is not used up at the TTI for transmitting the ProSe BSR, it is judged that there exists a remaining configured SL grant.

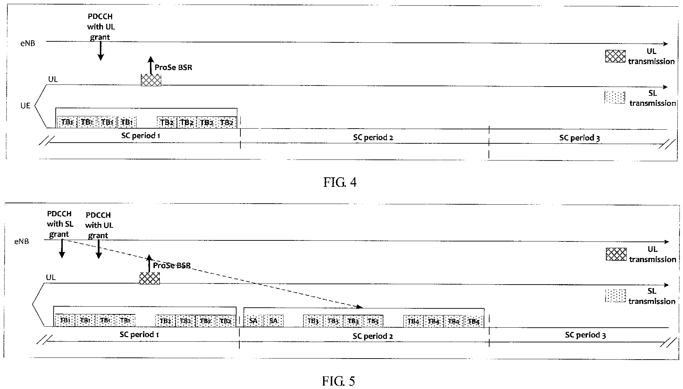

FIGs. 4-5 are schematic diagrams of two application scenarios of this implementation.

As shown in FIG. 4, in this scenario, the SC period where the TTI for transmitting the ProSe BSR is located in is an SC period 1. It can be seen from this figure that within SC period 1, there exists a configured SL grant, and within the TTI for transmitting the ProSe BSR, the SL grant is not used up. At this moment, it is judged that there exists a remaining configured SL grant. Furthermore, in the scenario shown in FIG. 4, in subsequent SC periods of SC period 1, such as a next SC period (SC period 2) and a further next SC period (SC period 3), there exists no configured SL grants, or, in other words, the UE does not obtain SL grants of SC period 2 and SC period 3 by decoding within or before the TTI for transmitting the ProSe BSR.

As shown in FIG. 5, in this scenario, what is different from the scenario shown in FIG. 4 is that the UE has obtained an SL grant of SC period 2 by decoding, but does not obtain an SL grant of SC period 3 by decoding, before the TTI for transmitting the ProSe BSR. In this scenario, it is also judged that there exists a remaining configured SL grant.

In another implementation, if there exists a configured SL grant within a next SC period of the SC period where the TTI for transmitting the ProSe BSR is located in and the UE has obtained the SL grant of the next SC period by decoding before the TTI for transmitting the ProSe BSR, it is judged that there exists a remaining configured SL grant.

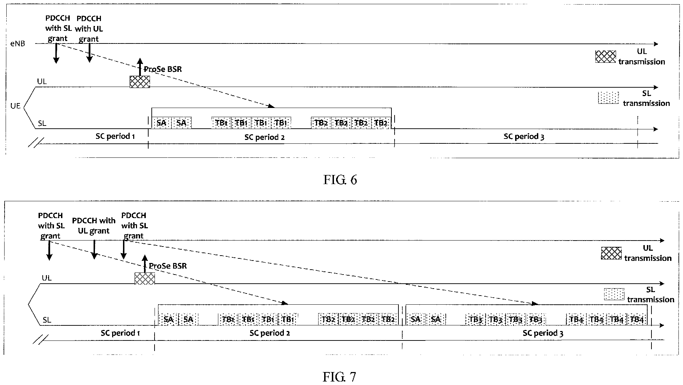

FIGs. 6-9 are schematic diagrams of four application scenarios of this implementation.

As shown in FIG. 6, in this scenario, the SC period where the TTI for transmitting the ProSe BSR is located in is SC period 1, there exists a configured SL grant in SC period 2, and the UE has obtained an SL grant of SC period 2 by decoding before the TTI for transmitting the ProSe BSR. At this moment, it is judged that there exists a remaining configured SL grant. Furthermore, in the scenario shown in FIG. 6, there exists no configured SL grant in SC period 1 where the TTI for transmitting the ProSe BSR is located in, and there exists also no configured SL grant in SC period 3, or, in other words, the UE does not obtain SL grants of SC period 3 by decoding before the TTI for transmitting the ProSe BSR.

As shown in FIG. 7, in this scenario, what is different from the scenario shown in FIG. 6 is that there exists a configured SL grant in SC period 3, or, in other words, the UE has obtained an SL grant of SC period 3 by decoding before the TTI for transmitting the ProSe BSR. In this scenario, it is also judged that there exists a remaining configured SL grant.

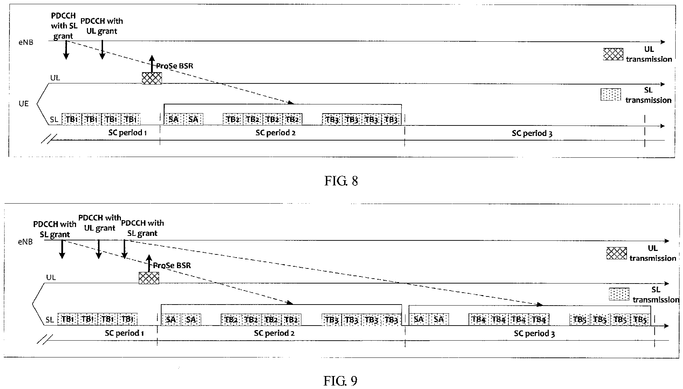

As shown in FIG. 8, in this scenario, what is different from the scenario shown in FIG. 6 is that there exists a configured SL grant in SC period 1 where the TTI for transmitting the ProSe BSR is located in, but the SL grant is used up within or before the TTI for transmitting the ProSe BSR. In this scenario, it is also judged that there exists a remaining configured SL grant.

As shown in FIG. 9, in this scenario, what is different from the scenario shown in FIG. 7 is that there exists a configured SL grant in SC period 1 where the TTI for transmitting the ProSe BSR is located in, but the SL grant is used up within or before the TTI for transmitting the ProSe BSR. In this scenario, it is also judged that there exists a remaining configured SL grant.

In another implementation, if a second SC period next to the SC period where the TTI for transmitting the ProSe BSR is located in has a configured SL grant and the UE has obtained an SL grant of the second SC period by decoding before the TTI for transmitting the ProSe BSR, it is judged that there exists a remaining configured SL grant.

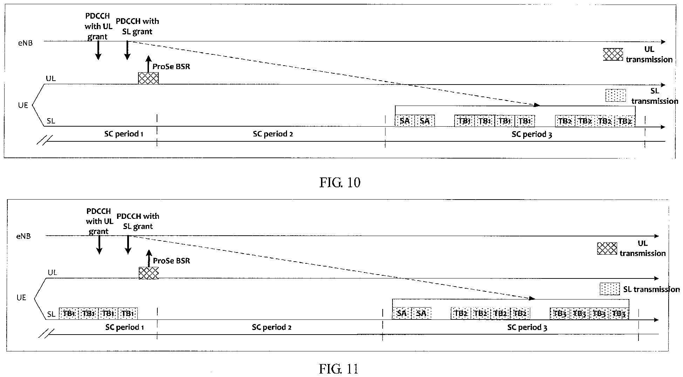

FIGs. 10-11 are schematic diagrams of two application scenarios of this implementation.

As shown in FIG. 10, in this scenario, the SC period where the TTI for transmitting the ProSe BSR is located in is SC period 1. Within a second SC period (SC period 3) next to SC period 1, there exists a configured SL grant, and before the TTI for transmitting the ProSe BSR, the UE has obtained an SL grant of the SC period 3 by decoding, it is judged that there exists a remaining configured SL grant. Furthermore, in the scenario shown in FIG. 10, there exists no configured SL grant in SC period 1 where the TTI for transmitting the ProSe BSR is located in, and there exists also no configured SL grant in a first SC period (SC period 2) next to SC period 1, or, in other words, the UE does not obtain an SL grant of the SC period 2 by decoding within or before the TTI for transmitting the ProSe BSR.

As shown in FIG. 11, in this scenario, what is different from the scenario shown in FIG. 10 is that there exists a configured SL grant in SC period 1 where the TTI for transmitting the ProSe BSR is located in, and the SL grant is used up within or before the TTI for transmitting the ProSe BSR. In this scenario, it is also judged that there exists a remaining configured SL grant.

In another implementation, if the SC period where the TTI for transmitting the ProSe BSR is located in has no configured SL grant, and before the TTI for transmitting the ProSe BSR, the UE does not obtain a configured SL grant of a subsequent SC period for the SC period by decoding, it is judged that there exists no remaining configured SL grant.

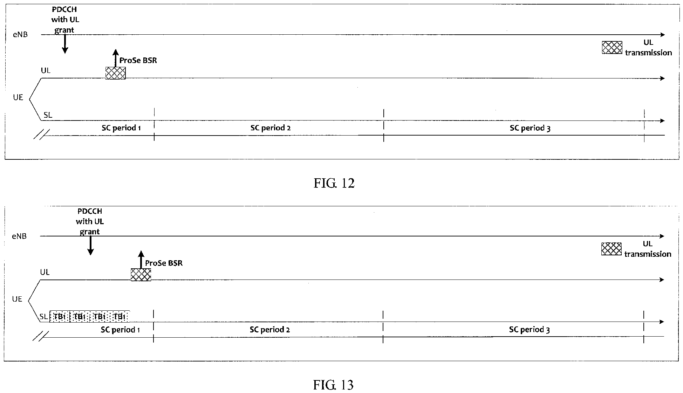

FIG. 12 is a schematic diagram of the application scenario of this implementation. As shown in FIG. 12, in this scenario, the SC period where the TTI for transmitting the ProSe BSR is located in is SC period 1. Within SC period 1, there exists no configured SL grant, and within a next SC period (SC period 2) and a further next SC period (SC period 3) of SC period 1, there exists no configured SL grant, or, in other words, before the TTI for transmitting the ProSe BSR, the UE does not obtain configured SL grants of subsequent SC period 2 and SC period 3 for SC period 1 by decoding. In this scenario, it is judged that there exists no remaining configured SL grant.

In another implementation, if the SC period where the TTI for transmitting the ProSe BSR is located in has a configured SL grant, but the SL grant is used up before the TTI for transmitting the ProSe BSR, and before the TTI for transmitting the ProSe BSR, the UE does not obtain configured SL grants of subsequent SC periods for the SC period by decoding, it is judged that there exists no remaining configured SL grant.

FIG. 13 is a schematic diagram of the application scenario of this implementation. As shown in FIG. 13, what is different from the scenario shown in FIG. 12 is that there exists a configured SL grant in SC period 1 where the TTI for transmitting the ProSe BSR is located in, but the SL grant is used up within or before the TTI for transmitting the ProSe BSR. In this scenario, it is also judged that there exists no remaining configured SL grant.

In step 303, the UE may determine the ProSe destination and its buffer size needing to be contained in the ProSe BSR according to the judgment result of step 302.

In step 303, if the judgment result of step 302 is that there exists no remaining configured SL grant, that is, the scenarios shown in FIGs. 12 and 13, the UE may determine the ProSe destination and its buffer size needing to be contained in the ProSe BSR according to a buffer status within the TTI for transmitting the ProSe BSR. That is to say, the UE only considers that there exists a ProSe destination of data available for transmission at the TTI for transmitting the ProSe BSR. At this moment, what is reflected by the ProSe BSR is the buffer status within the TTI for transmitting the ProSe BSR.

In particular, when the UE has a UL grant for a TTI that is able to transmit a triggered ProSe BSR, the UE may determine ProSe destinations to which logic channels having data available for transmission at the current TTI correspond. Then, for a common ProSe BSR or a periodic ProSe BSR, according to the size of the UL grant and the number of a previously-determined ProSe destinations having data available for transmission, the UE determines whether a ProSe BSR containing all ProSe destinations having data available for transmission or a truncated ProSe BSR containing a part of ProSe destinations having data available for transmission needs to be reported; and for a padding ProSe BSR, according to the number of available padding bits and the number of previously-determined ProSe destinations having data available for transmission, the UE determines whether a ProSe BSR containing all ProSe destinations having data available for transmission or a truncated ProSe BSR containing a part of ProSe destinations having data available for transmission needs to be reported.

In this embodiment, for the ProSe destinations needing to be contained in the ProSe BSR or the truncated ProSe BSR, the UE determines an amount of data in a buffer to which the TTI for transmitting the ProSe BSR corresponds, and determines a buffer size to which each ProSe destination corresponds according to the amount of data and a BSR table in a document "TS36.321, Medium Access Control (MAC) protocol specification, v 12.2.0".

Hence, a problem that a buffer status of a sidelink cannot be correctly reflected in a ProSe BSR by UE in reporting the ProSe BSR can be solved.

In step 303, if the judgment result of step 302 is that there exist remaining configured SL grants, that is, the scenarios shown in FIGs. 4-11, the UE may determine the ProSe destinations having data available for transmission that need to be contained in the ProSe BSR according to ProSe destinations having still data available for transmission after the remaining configured SL grants are used up.

For example, the UE first determines the ProSe destinations having still data available for transmission after the remaining configured SL grants are used up, and then determines the ProSe destinations having data available for transmission that can be contained in the ProSe BSR according to a number of remaining bits taking data or medium access control control elements (MAC CEs) having higher priorities than the ProSe BSR into account in UL grant(s) for the TTI for transmitting the ProSe BSR or a number of available additional bits in the TTI for transmitting the ProSe BSR. In this example, the MAC CEs are, for example, BSR MAC CEs.

In this embodiment, for determining the ProSe destinations having data available for transmission:
in an implementation 1, after the UE obtains the SL grant by decoding or at a start of an SC period to which the SL grant corresponds, the UE may determine sizes of data that can be transmitted within the whole SC period to which the SL grant corresponds according to resources for transmitting data allocated in the SL grant, and generates all SL MAC PDUs that can be transmitted within the SC period to which the SL grant corresponds according to the sizes of data that can be transmitted; thus, the UE may directly determine logic channels having data available for transmission to which the ProSe destinations correspond within the TTI for transmitting the ProSe BSR, that is, determining the ProSe destinations having still data available for transmission in the buffer;
in an implementation 2, after the UE obtains the SL grant by decoding, in each TTI for transmitting data allocated in the SL grant, the UE builds a corresponding SL MAC PDU that can be transmitted within the TTI. Hence, the UE may, within the TTI for transmitting the ProSe BSR, calculate the number and sizes of all SL MAC PDUs that can be built assuming that all remaining resources for transmitting data allocated in the SL grant are used up, and then determine logic channels having data available for transmission to which the ProSe destinations correspond after the SL MAC PDUs are excluded.

In this embodiment, for determining the ProSe destinations having data available for transmission that can be contained in the ProSe BSR:
in particular, for a common ProSe BSR or a periodic ProSe BSR, according to the number of remaining bits taking data or medium access control control elements (MAC CEs) having higher priorities than the ProSe BSR into account in the UL grant and a previously-determined number of ProSe destinations having data available for transmission, the UE determines whether a ProSe BSR containing all ProSe destinations having data available for transmission or a truncated ProSe BSR containing a part of ProSe destinations having data available for transmission needs to be reported, and for a padding ProSe BSR, according to the number of available padding bits and the previously-determined number of ProSe destinations having data available for transmission, the UE determines whether a ProSe BSR containing all ProSe destinations having data available for transmission or a truncated ProSe BSR containing a part of ProSe destinations having data available for transmission needs to be reported.

In step 303, if the judgment result of step 302 is that there exist remaining configured SL grants, that is, the scenarios shown in FIGs. 4-11, the UE may determine buffer sizes of the ProSe destinations according to buffer statuses after all SL MAC PDUs that can be built by all the remaining configured SL grants are used up, that is, the UE determines that the buffer sizes of the ProSe destinations are: buffer statuses after all SL MAC PDUs that can be built by all the remaining configured SL grants are used up.

In particular, for the ProSe destinations needing to be contained in the ProSe BSR or the truncated ProSe BSR, the UE determines the buffer sizes of the ProSe destinations are amounts of data in the buffer after all SL MAC PDUs that can be built by all the remaining configured SL grants are used up.

In implementation 3, similar to implementation 1, the UE needs first to build SL MAC PDUs, and then within the TTI for transmitting the ProSe BSR, calculates the amounts of data in the buffer and takes them as the buffer sizes of the ProSe destinations.

In implementation 4, similar to implementation 2, the UE calculates the amounts of data in the buffer after excluding all the SL MAC PDUs that are assumed to be built by consuming all the remaining configured SL grants, and takes them as the buffer sizes of the ProSe destinations

In step 303, if the judgment result of step 302 is that there exist remaining configured SL grants, that is, the scenarios shown in FIGs. 4-11, the UE may determine the ProSe destinations needing to be contained in the ProSe BSR according to ProSe destinations having still data available for transmission after the remaining configured SL grant is used up, details being as described above, and being not going to be described herein any further, and determine the buffer sizes of the ProSe destinations according to the buffer statuses after all SL MAC PDUs that can be built by all the remaining configured SL grants are use up, the buffer sizes being directed to the above-determined ProSe destinations having data available for transmission and needing to be contained in the ProSe BSR, that is, in this implementation, the UE may determine that the buffer sizes are: buffer statuses after all SL MAC PDUs that can be built by all the remaining configured SL grants are used up by the ProSe destinations having data available for transmission.

In implementation 5, similar to implementation 1, the UE needs first to build SL MAC PDUs, and then within the TTI for transmitting the ProSe BSR, determines the ProSe destinations having data available for transmission and needing to be contained in the BSR according to the ProSe destinations having still data available for transmission in the buffer, and within the TTI for transmitting the ProSe BSR, calculates sizes of the amounts of the data in the buffer of the ProSe destinations having data available for transmission and takes them as the buffer sizes of the ProSe destinations having data available for transmission.

In implementation 6, similar to implementation 2, within the TTI for transmitting the ProSe BSR, the UE determines the ProSe destinations needing to be contained in the BSR according to ProSe destinations having data available for transmission after excluding all the SL MAC PDUs that are assumed to be built by consuming all the remaining configured SL grants, and within the TTI for transmitting the ProSe BSR, calculates sizes of the amounts of the data in the buffer of the ProSe destinations having data available for transmission after excluding all the SL MAC PDUs that are assumed to be built by consuming all the remaining configured SL grants and takes them as the buffer sizes of the ProSe destinations having data available for transmission.

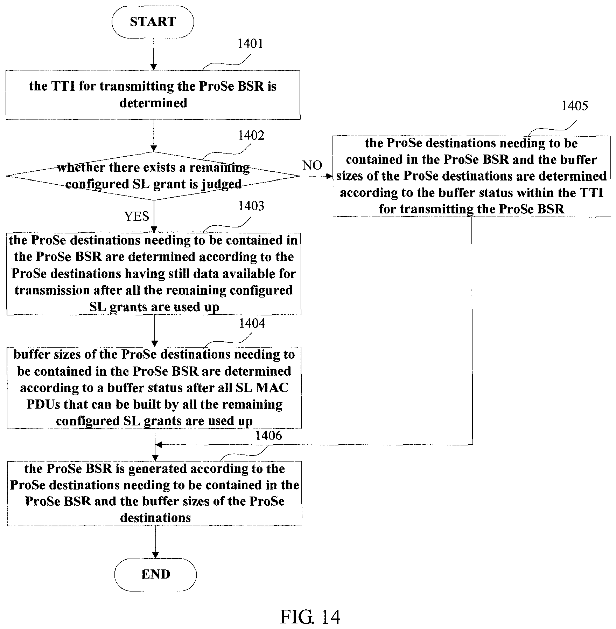

FIG. 14 is an overall flowchart of the method of this embodiment. As shown in FIG. 14, the method includes:
step 1401: the TTI for transmitting the ProSe BSR is determined;
   wherein, step 1401 corresponds to step 301, and a detailed process is as described above, which shall not be described herein any further;
step 1402: whether there exists a remaining configured SL grant is judged, and step 1403 is executed if yes, otherwise, step 1405 is executed;
   wherein, step 1402 corresponds to step 302, and a detailed process is as described above, which shall not be described herein any further;
step 1403: the ProSe destinations needing to be contained in the ProSe BSR are determined according to the ProSe destinations having still data available for transmission after all the remaining configured SL grants are used up;
   wherein, the ProSe destinations having still data available for transmission after all the remaining configured SL grants are used up may be determined first, and then the ProSe destinations having data available for transmission and needing to be contained in the ProSe BSR are determined according to the number of bits in UL grants for the TTI for transmitting the ProSe BSR or the number of additional bits in the TTI for transmitting the ProSe BSR;
   wherein, step 1403 corresponds to the processing in step 303 of determining the ProSe destinations needing to be contained in the ProSe BSR when a judgment result in step 302 is that there exists a remaining configured SL grant, and a detailed process is as described above, which shall not be described herein any further;
step 1404: buffer sizes of the ProSe destinations needing to be contained in the ProSe BSR are determined according to a buffer status after all SL MAC PDUs that can be built by all the remaining configured SL grants are used up;
   wherein, step 1404 corresponds to the processing in step 303 of determining the buffer sizes of the ProSe destinations needing to be contained in the ProSe BSR when a judgment result in step 302 is that there exists a remaining configured SL grant, and a detailed process is as described above, which shall not be described herein any further;
   wherein, an order of execution of steps 1403 and 1404 is not limited in this embodiment; for example, step 1403 may be executed first, and then step 1404 is executed, or step 1404 may be executed first, and then step 1403 is executed, or steps 1403 and 1404 may be executed at the same time; and wherein, when step 1403 is executed before step 1404, step 1404 is directed to the buffer sizes of the ProSe destinations having data available for transmission that can be contained in the ProSe BSR;
step 1405: the ProSe destinations needing to be contained in the ProSe BSR and the buffer sizes of the ProSe destinations are determined according to the buffer status within the TTI for transmitting the ProSe BSR;
   wherein, step 1405 corresponds to the processing in the UE in step 303 when a judgment result in step 302 is that there exists no remaining configured SL grant, and a detailed process is as described above, which shall not be described herein any further;
step 1406: the ProSe BSR is generated according to the ProSe destinations needing to be contained in the ProSe BSR and the buffer sizes of the ProSe destinations.

In this way, the UE may transmit the ProSe BSR reflecting the buffer status of the sidelink within the TTI for transmitting the ProSe BSR, and the technical problem to be solved by this application is solved.

With the method of this embodiment, in transmitting the ProSe BSR, the UE may reasonably determine the ProSe destinations having data available for transmission and needing to be contained in the ProSe BSR, and at the same time, the UE may reasonably determine the size of each ProSe destination contained in the ProSe BSR, hence, the problem that a buffer status of a sidelink cannot be correctly reflected in a ProSe BSR in reporting the ProSe BSR by UE is solved.

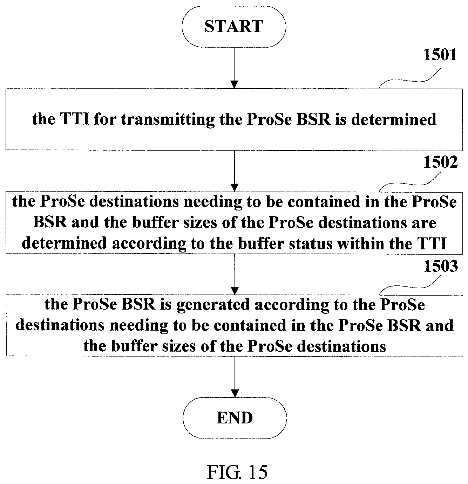

FIG. 15 is a flowchart of another implementation of the method of this embodiment. As shown in FIG. 15, the method includes:
step 1501: the TTI for transmitting the ProSe BSR is determined by the UE;
step 1502: the ProSe destinations needing to be contained in the ProSe BSR and the buffer sizes of the ProSe destinations are determined by the UE according to the buffer status within the TTI; and
step 1503: the ProSe BSR is generated by the UE according to the ProSe destinations needing to be contained in the ProSe BSR and the buffer sizes of the ProSe destinations;
   wherein, implementation of step 1502 is identical to that of step 1405, and details are as those described above, which shall not be described herein any further.

In this implementation, the UE considers only the ProSe destinations having data available for transmission at the TTI for transmitting the ProSe BSR, and at this moment, what is reflected by the ProSe BSR is a buffer status at the TTI for transmitting the ProSe BSR. Hence, the buffer status of the sidelink may be correctly reflected in the ProSe BSR in reporting the ProSe BSR by the UE, and the technical problem to be solved by this application is solved.

And this implementation is also applicable to the ten scenarios shown in FIGs. 4-13, that is, the ProSe BSR may be generated by using the method shown in FIG. 15 in any of the scenarios shown in FIGs. 4-13.

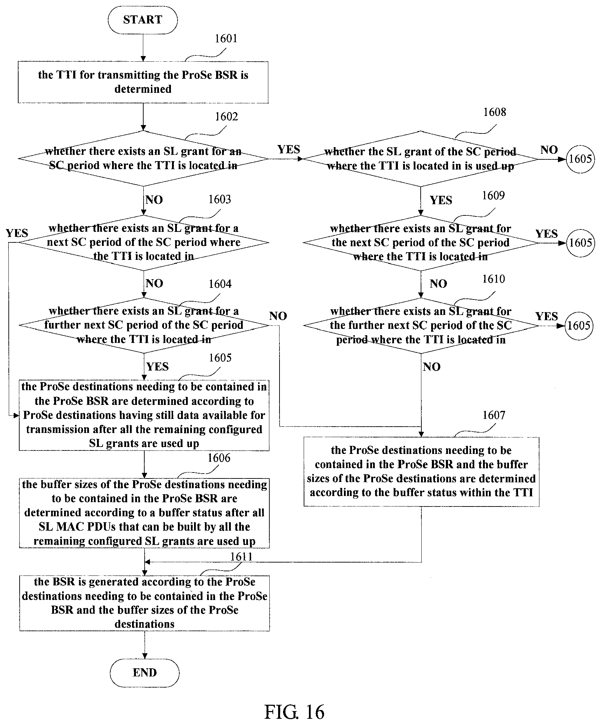

FIG. 16 is a flowchart of still another implementation of the method of this embodiment. As shown in FIG. 16, the method includes:
step 1601: the TTI for transmitting the ProSe BSR is determined by the UE;
step 1602: whether there exists an SL grant for an SC period where the TTI is located in is judged, and step 1603 is executed if no (corresponding to the scenarios in FIGs. 12, 10, 6 and 7), otherwise, step 1607 is executed (corresponding to the scenarios in FIGs. 13, 11, 8, 9, 4 and 5);
step 1603: whether there exists an SL grant for a next SC period of the SC period where the TTI is located in is judged, and step 1604 is executed if no (corresponding to the scenarios in FIGs. 12 and 10), otherwise, step 1605 is executed (corresponding to the scenarios in FIGs. 6 and 7);
step 1604: whether there exists an SL grant for a further next SC period of the SC period where the TTI is located in is judged, and step 1605 is executed if yes (corresponding to the scenario in FIG. 10), otherwise, step 1607 is executed (corresponding to the scenario in FIG. 12);
step 1605: the ProSe destinations needing to be contained in the ProSe BSR are determined according to ProSe destinations having still data available for transmission after all the remaining configured SL grants are used up;
step 1606: the buffer sizes of the ProSe destinations needing to be contained in the ProSe BSR are determined according to a buffer status after all SL MAC PDUs that can be built by all the remaining configured SL grants are used up;
step 1607: the ProSe destinations needing to be contained in the ProSe BSR and the buffer sizes of the ProSe destinations are determined according to the buffer status within the TTI;
step 1608: whether the SL grant of the SC period where the TTI is located in is used up is judged, and step 1609 is executed if yes (corresponding to the scenarios in FIGs. 13, 11, 8 and 9), otherwise, step 1605 is executed (corresponding to the scenarios in FIGs. 4 and 5);
step 1609: whether there exists an SL grant for the next SC period of the SC period where the TTI is located in is judged, and step 1605 is executed if yes (corresponding to the scenarios in FIGs. 8 and 9), otherwise, step 1610 is executed (corresponding to the scenarios in FIGs. 13 and 11);
step 1610: whether there exists an SL grant for the further next SC period of the SC period where the TTI is located in is judged, and step 1605 is executed if yes (corresponding to the scenario in FIG. 11), otherwise, step 1607 is executed (corresponding to the scenario in FIG. 13); and
step 1611: the ProSe BSR is generated by the UE according to the ProSe destinations needing to be contained in the ProSe BSR and the buffer sizes of the ProSe destinations;
   wherein, implementations of steps 1605-1606 and 1607 are identical to those of steps 1403-1404 and 1405, and details are as those described above, which shall not be described herein any further.

In this implementation, the UE considers only whether there exists a remaining configured SL grant, and if only there exists a remaining configured SL grant, the ProSe destinations needing to be contained in the ProSe BSR and the buffer sizes of the ProSe destinations may be determined according to the manners in steps 1605-1606, no matter the remaining configured SL grant is within the SC period to which the TTI for transmitting the ProSe BSR corresponds, or the next SC period of the SC period, or the further next SC period of the SC period; otherwise, the ProSe destinations needing to be contained in the ProSe BSR and the buffer sizes of the ProSe destinations may be determined according to the manner in step 1607. Hence, the buffer status of the sidelink may be correctly reflected in the ProSe BSR in reporting the ProSe BSR by the UE, and the technical problem to be solved by this application is solved.

In this embodiment, the above-described remaining configured SL grant may be defined as an available SL grant, or may be defined as a valid SL grant, etc., and this embodiment is not limited thereto. Furthermore, the above-described remaining configured SL grant may be defined as SL grant(s) for the SC period where the TTI for transmitting the ProSe BSR is present and/or its subsequent SC periods.

With the method of this embodiment, the problem that a buffer status of a sidelink cannot be correctly reflected in a ProSe BSR in reporting the ProSe BSR by UE may be solved.

### Embodiment 2

An embodiment of this disclosure provides an apparatus for generating a buffer status report, which may be applicable to UE. As principles of the apparatus are similar to that of the method of Embodiment 1, the implementation of the method of Embodiment 1 may be referred to for implementation of the apparatus, with identical contents being not going to be described herein any further.

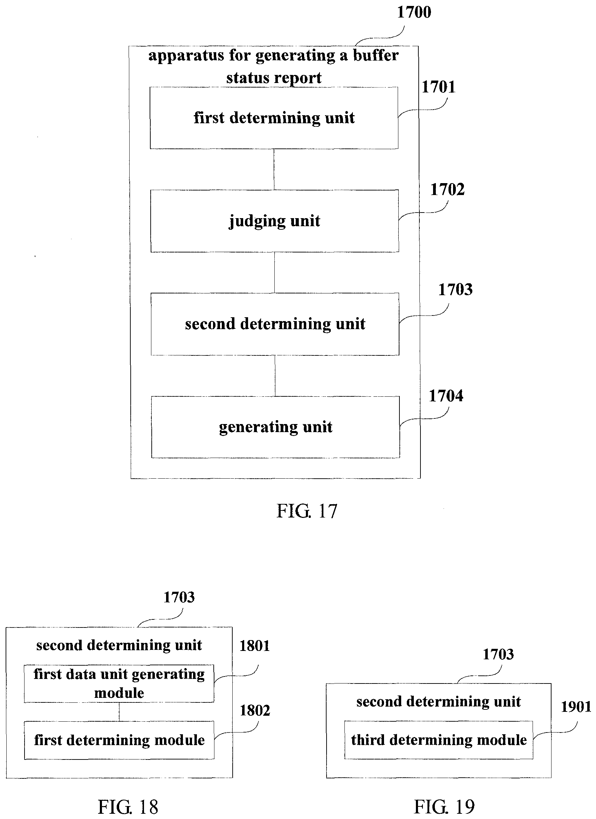

FIG. 17 is a schematic diagram of a structure of the apparatus. Referring to FIG. 17, the apparatus 1700 for generating a buffer status report includes: a first determining unit 1701, a judging unit 1702, a second determining unit 1703 and a generating unit 1704.

In this embodiment, the first determining unit 1701 is configured to determine the transmission time interval for transmitting a buffer status report of a sidelink.

In this embodiment, the judging unit 1702 is configured to judge whether there exists a remaining configured sidelink grant.

In this embodiment, the second determining unit 1703 is configured to determine the ProSe destination needing to be contained in the buffer status report and its buffer size according to a judgment result of the judging unit 1702.

In this embodiment, the generating unit 1704 is configured to generate the buffer status report according to the ProSe destination needing to be contained in the buffer status report and its buffer size determined by the second determining unit 1703.

In an implementation, the judging unit 1702 is configured to judge whether there exists a remaining configured sidelink grant for a sidelink control period containing the transmission time interval and/or its subsequent sidelink control period.

In an implementation, the judging unit 1702 judges that there exists a remaining configured sidelink grant when following cases occur:
there exists a configured sidelink grant in the sidelink control period where the transmission time interval is located in, and the configured sidelink grant is not used up when transmitting the buffer status report, and/or
there exists a configured sidelink grant in a sidelink control period next to the sidelink control period where the transmission time interval is located in, and before the transmission time interval, the user equipment has decoded and obtained the sidelink grant of the sidelink control period next to the sidelink control period where the transmission time interval is located in, and/or
there exists a configured sidelink grant in a sidelink control period second next to the sidelink control period where the transmission time interval is located in, and before the transmission time interval, the user equipment has decoded and obtained the sidelink grant of the sidelink control period second next to the sidelink control period where the transmission time interval is located in.

In an implementation, the judging unit 1702 judges that there exists no remaining configured sidelink grant when following cases occur:
there exists no configured sidelink grant in the sidelink control period where the transmission time interval is located in, and before the transmission time interval, the user equipment has not decoded and obtained the configured sidelink grant for the subsequent sidelink control period of the sidelink control period, and/or
there exists a configured sidelink grant in the sidelink control period where the transmission time interval is located in, but the configured sidelink grant is used up before the transmission time interval, and before the transmission time interval, the user equipment has not decoded and obtained the configured sidelink grant for the subsequent sidelink control period of the sidelink control period.

In an implementation, the second determining unit 1703 determines the ProSe destination needing to be contained in the buffer status report according to a ProSe destination having still data available for transmission after all remaining configured sidelink grants are used up when the judgment result of the judging unit 1702 is that there exist remaining configured sidelink grants.

In this implementation, the second determining unit 1703 first determines the ProSe destination having still data available for transmission after all remaining configured sidelink grants are used up, and then determines the ProSe destination needing to be contained in the ProSe BSR according to a number of remaining bits taking data having higher priorities than the ProSe BSR or medium access control elements for uplink grants of the transmission time interval into account or a number of available additional bits in the transmission time interval.

In this implementation, alternatively, as shown in FIG. 18, the second determining unit 1703 may include a first data unit generating module 1801 and a first determining module 1802. After the UE obtains the SL grant by decoding or at a start of an SC period to which the SL grant corresponds, the first data unit generating module 1801 determines sizes of data that can be transmitted within the whole SC period to which the SL grant corresponds according to resources for transmitting data allocated in the SL grant, and generates all SL MAC PDUs that can be transmitted within the SC period to which the SL grant corresponds according to the sizes of data that can be transmitted; and within the transmission time interval, the first determining module 1802 determines ProSe destinations having still data available for transmission in the buffer, and take them as the ProSe destinations having still data available for transmission after all the remaining configured SL grants are used up.

In this implementation, alternatively, as shown in FIG. 19, the second determining unit 1703 may include a third determining module 1901 configured to determine, within the transmission time interval, that ProSe destinations having still data available for transmission after all the remaining configured SL grants are used up are: ProSe destinations having data available for transmission after excluding all SL MAC PDUs that are assumed to be built by consuming all the remaining configured SL grants.

In an implementation, when the judgment result of the judging unit 1702 is that there exist remaining configured sidelink grants, the second determining unit 1703 determines that a buffer size of the ProSe destination needing to be contained in the ProSe BSR is: a buffer status after all SL MAC PDUs that can be built by all the remaining configured sidelink grants are used up.

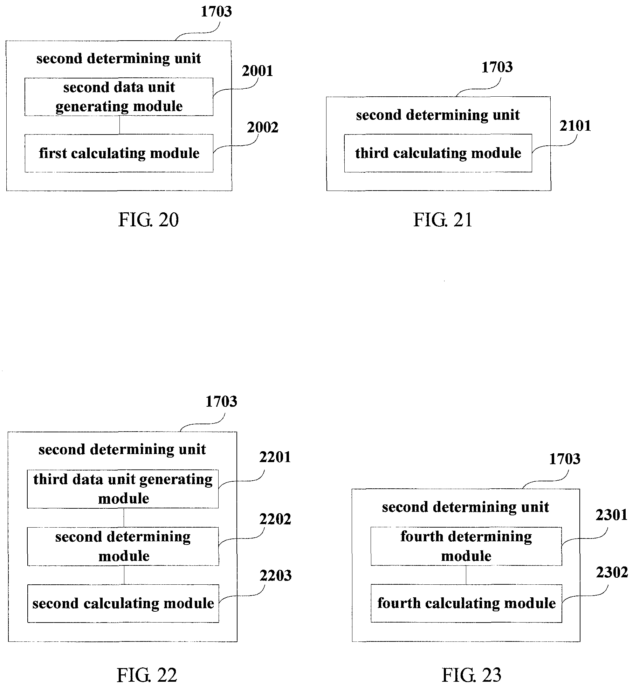

In this implementation, alternatively, as shown in FIG. 20, the second determining unit 1703 includes a second data unit generating module 2001 and a first calculating module 2002. After the UE obtains the SL grant by decoding or at a start of an SC period to which the SL grant corresponds, the second data unit generating module 2001 determines sizes of data that can be transmitted within the whole SC period to which the SL grant corresponds according to resources for transmitting data allocated in the SL grant, and generates all SL MAC PDUs that can be transmitted within the SC period to which the SL grant corresponds according to the sizes of data that can be transmitted; and within the transmission time interval, the first calculating module 2002 calculates sizes of data amounts in the buffer and take them as the buffer sizes of the ProSe destinations needing to be contained in the ProSe BSR.

In this implementation, alternatively, as shown in FIG. 21, the second determining unit 1703 includes a third calculating module 2101 configured to, within the transmission time interval, calculate the sizes of data amount in the buffer after excluding all the SL MAC PDUs that are assumed to be built by consuming all the remaining configured SL grants, and take them as the buffer sizes of the ProSe destinations needing to be contained in the ProSe BSR.

In the above implementations, the second determining unit in FIG. 18 and the second determining unit in FIG. 20 may be combined, that is, a second determining unit may include the first data unit generating module 1801, the first determining module 1802, the second data unit generating module 2001 and the first calculating module 2002 at the same time, determine the ProSe destinations needing to be contained in the ProSe BSR by the first data unit generating module 1801 and the first determining module 1802, and determine the buffer sizes of the ProSe destinations needing to be contained in the ProSe BSR by the second data unit generating module 2001 and the first calculating module 2002. In this implementation, the first data unit generating module 1801 and the second data unit generating module 2001 have identical functions, and may be combined as one module. And likewise, the second determining unit in FIG. 19 and the second determining unit in FIG. 21 may also be combined.

In an implementation, when the judgment result of the judging unit 1702 is that there exist remaining configured sidelink grants, the second determining unit 1703 determines the ProSe destination needing to be contained in the buffer status report according to a ProSe destination having still data available for transmission after all the remaining configured sidelink grants are used up, and determines a buffer size of the ProSe destination having data available for transmission according to a buffer status of the ProSe destination having data available for transmission after all SL MAC PDU has been built by consuming all the remaining configured sidelink grants.

In this implementation, alternatively, as shown in FIG. 22, the second determining unit 1703 includes a third data unit generating module 2201, a second determining module 2202 and a second calculating module 2203. After the UE obtains the SL grant by decoding or at a start of an SC period to which the SL grant corresponds, the third data unit generating module 2201 determines sizes of data that can be transmitted within the whole SC period to which the SL grant corresponds according to resources for transmitting data allocated in the SL grant, and generates all SL MAC PDUs that can be transmitted within the SC period to which the SL grant corresponds according to the sizes of data that can be transmitted; within the transmission time interval, the second determining module 2201 determines the ProSe destinations having still data available for transmission in the buffer, and take them as the ProSe destinations having still data available for transmission after all remaining configured SL grants are used up; and within the transmission time interval, the second calculating module 2203 calculates sizes of data amounts in the buffer of the ProSe destinations having data available for transmission, and takes them as buffer sizes of the ProSe destinations having data available for transmission.

In this implementation, alternatively, as shown in FIG. 23, the second determining unit 1703 includes a fourth determining module 2301 and a fourth calculating module 2302. Within the transmission time interval, the fourth determining module 2301 determines that the ProSe destinations having still data available for transmission after all remaining configured SL grants are used up are: ProSe destinations having data available for transmission after excluding all SL MAC PDUs that are assumed to be built by consuming all the remaining configured SL grants. And within the transmission time interval, the fourth calculating module 2302 calculates the sizes of data amount in the buffer of the ProSe destination having data available for transmission after excluding all the SL MAC PDUs that are built by consuming all the remaining configured SL grants, and take them as the buffer sizes of the ProSe destinations having data available for transmission.

In an implementation, the second determining unit 1703 determines the ProSe destination needing to be contained in the buffer status report and its buffer size according to a buffer status of the transmission time interval for transmitting the buffer status report, when the judgment result of the judging unit 1702 is that there exists no remaining configured sidelink grant.

With the apparatus of this embodiment, in transmitting the buffer status report of the sidelink (ProSe BSR), the UE may reasonably determine the ProSe destinations having data available for transmission and needing to be contained in the ProSe BSR, and at the same time, the UE may reasonably determine a buffer size of each ProSe destination contained in the ProSe BSR, hence, the problem that a buffer status of a sidelink cannot be correctly reflected in a ProSe BSR in reporting the ProSe BSR by UE is solved.

### Embodiment 3

An embodiment of this disclosure further provides UE, including the apparatus for generating a buffer status report as described in Embodiment 2.

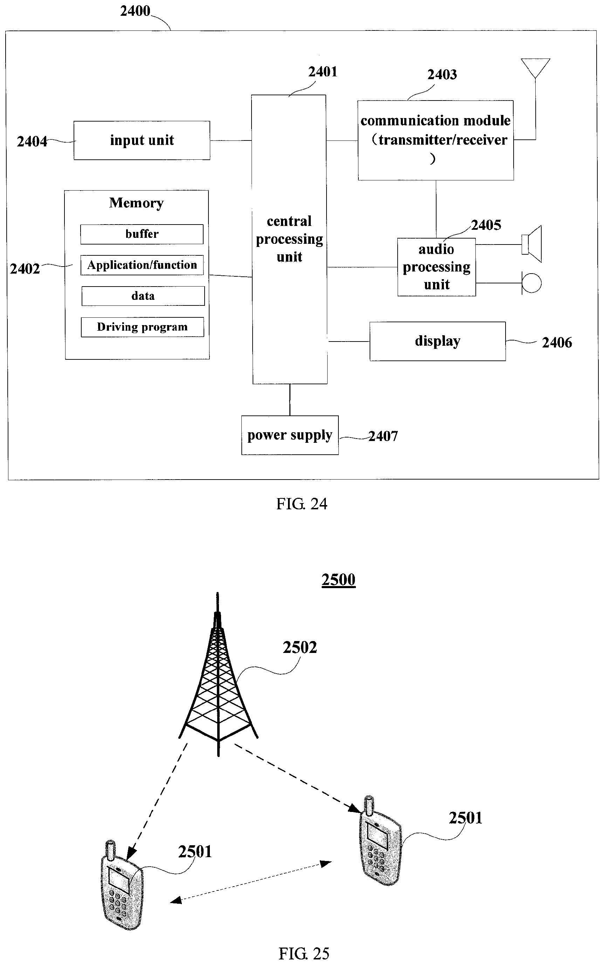

FIG. 24 is a schematic diagram of a structure of the UE of the embodiment of this disclosure. As shown in FIG. 24, the UE 2400 may include a central processing unit 2401 and a memory 2402, the memory 2402 being coupled to the central processing unit 2401. It should be noted that this figure is illustrative only, and other types of structures may also be used, so as to supplement or replace this structure and achieve a telecommunications function or other functions.

In an implementation, the functions of the apparatus for generating a buffer status report may be integrated into the central processing unit 1801, and the central processing unit 2401 carries out functions of the apparatus for generating a buffer status report described in Embodiment 2. In this implementation, the functions of the apparatus for generating a buffer status report are incorporated herein, and shall not be described herein any further.

In another implementation, the apparatus for generating a buffer status report and the central processing unit 2401 may be configured separately. For example, the apparatus for generating a buffer status report may be configured as a chip connected to the central processing unit 2401, with its functions being realized under control of the central processing unit 2401.

As shown in FIG. 24, the UE 2400 may further include a communication module 2403, an input unit 2404, an audio processing unit 2405, a display 2406 and a power supply 2407. It should be noted that the UE 2400 does not necessarily include all the parts shown in FIG. 24, and furthermore, the UE 2400 may include parts not shown in FIG. 24, and the prior art may be referred to.

As shown in FIG. 24, the central processing unit 2401 is sometimes referred to as a controller or control, and may include a microprocessor or other processor devices and/or logic devices. The central processing unit 2401 receives input and controls operations of every components of the UE 1800.

In this implementation, the memory 2402 may be, for example, one or more of a buffer memory, a flash memory, a hard drive, a mobile medium, a volatile memory, a nonvolatile memory, or other suitable devices, which may store the above configuring related information, and may further store a program executing related information. And the central processing unit 2401 may execute the program stored in the memory 2402, so as to realize information storage or processing, etc. Functions of other parts are similar to those of the prior art, which shall not be described herein any further. The parts of the UE 2400 may be realized by specific hardware, firmware, software, or any combination thereof, without departing from the scope of the present disclosure.

With the UE of this embodiment, in transmitting the buffer status report of the sidelink (ProSe BSR), the ProSe destinations having data available for transmission and needing to be contained in the ProSe BSR may be reasonably determined, and at the same time, a buffer size of each ProSe destination contained in the ProSe BSR may also be reasonably determined, hence, the problem that a buffer status of a sidelink cannot be correctly reflected in a ProSe BSR in reporting the ProSe BSR by UE is solved.

### Embodiment 4

An embodiment of this disclosure further provides a communication system. FIG. 25 is a schematic diagram of a topology of the communication system. As shown in FIG. 25, the communication system 2500 includes UE 2501 and a base station 2502.

In this embodiment, the base station 2502 is configured to transmit a PDCCH containing an SL grant and a PDCCH containing a UL grant to the UE 2501 at a suitable time.

In this embodiment, the UE 2501 is configured to perform communication based on a conventional infrastructure with the base station 2502, and may perform communication based on D2D with other UEs 2501.

In this embodiment, the UE 2501 may employ the method for generating a buffer status report described in Embodiment 1, that is, to carry out the functions of the apparatus for generating a buffer status report described in Embodiment 2. The contents of Embodiment 1 and Embodiment 2 are incorporated herein, and shall not be described herein any further.

With the communication system of this embodiment, in transmitting the buffer status report of the sidelink (ProSe BSR), the ProSe destinations having data available for transmission and needing to be contained in the ProSe BSR may be reasonably determined, and at the same time, a buffer size of each ProSe destination contained in the ProSe BSR may also be reasonably determined, hence, the problem that a buffer status of a sidelink cannot be correctly reflected in a ProSe BSR in reporting the ProSe BSR by UE is solved.

An embodiment of the present disclosure provides a computer readable program code, which, when executed in an apparatus for generating a buffer status report or UE, will cause a computer unit to carry out the method for generating a buffer status report described in Embodiment 1 in the apparatus for generating a buffer status report or the UE.

An embodiment of the present disclosure provides a computer readable medium, including a computer readable program code, which will cause a computer unit to carry out the method for generating a buffer status report described in Embodiment 1 in an apparatus for generating a buffer status report or UE.

The above apparatuses and methods of the present disclosure may be implemented by hardware, or by hardware in combination with software. The present disclosure relates to such a computer-readable program that when the program is executed by a logic device, the logic device is enabled to carry out the apparatus or components as described above, or to carry out the methods or steps as described above. The present disclosure also relates to a storage medium for storing the above program, such as a hard disk, a floppy disk, a CD, a DVD, and a flash memory, etc.

The present disclosure is described above with reference to particular embodiments. However, it should be understood by those skilled in the art that such a description is illustrative only, and not intended to limit the protection scope of the present disclosure. Various variants and modifications may be made by those skilled in the art according to the principle of the present disclosure, and such variants and modifications fall within the scope of the present disclosure.

## Claims

1. An apparatus for generating a buffer status report, applicable to user equipment, the apparatus comprising:
a first determining unit configured to determine the transmission time interval for transmitting a buffer status report of a sidelink;
a judging unit configured to judge whether there exists a remaining configured sidelink grant;
a second determining unit configured to determine the sidelink destination and its buffer size needing to be contained in the buffer status report according to a judgment result of the judging unit; and
a generating unit configured to generate the buffer status report according to the sidelink destination and its buffer size needing to be contained in the buffer status report determined by the second determining unit.

2. The apparatus according to claim 1, wherein the judging unit is configured to judge whether there exists a remaining configured sidelink grant for a sidelink control period containing the transmission time interval and/or its subsequent sidelink control period.

3. The apparatus according to claim 1, wherein the judging unit judges that there exists a remaining configured sidelink grant when following cases occur:
there exists a configured sidelink grant in the sidelink control period where the transmission time interval is present, and the configured sidelink grant is not used up within the transmission time interval, and/or
there exists a configured sidelink grant in a sidelink control period next to the sidelink control period where the transmission time interval is present, and before the transmission time interval, the user equipment has decoded and obtained the sidelink grant of the sidelink control period next to the sidelink control period where the transmission time interval is present, and/or
there exists a configured sidelink grant in a sidelink control period second next to the sidelink control period where the transmission time interval is present, and before the transmission time interval, the user equipment has decoded and obtained the sidelink grant of the sidelink control period second next to the sidelink control period where the transmission time interval is present.

4. The apparatus according to claim 1, wherein the judging unit judges that there exists no remaining configured sidelink grant when following cases occur:
there exists no configured sidelink grant in the sidelink control period where the transmission time interval is present, and before the transmission time interval, the user equipment has not decoded and obtained the configured sidelink grant for the subsequent sidelink control period of the sidelink control period, and/or
there exists a configured sidelink grant in the sidelink control period where the transmission time interval is present, but the configured sidelink grant is used up before the transmission time interval, and before the transmission time interval, the user equipment has not decoded and obtained the configured sidelink grant for the subsequent sidelink control period of the sidelink control period.

5. The apparatus according to claim 1, wherein the second determining unit determines the sidelink destination needing to be contained in the buffer status report according to a sidelink destination having still data available for transmission after all remaining configured sidelink grants are used up when the judgment result of the judging unit is that there exist remaining configured sidelink grants.

6. The apparatus according to claim 5, wherein the second determining unit first determines the sidelink destination having still data available for transmission after all remaining configured sidelink grants are used up, and then determines the sidelink destination needing to be contained in the buffer status report of the sidelink according to a number of remaining bits taking data sidelink having higher priorities than the buffer status report of the sidelink or medium access control elements for uplink grants of the transmission time interval into account or a number of available additional bits in the transmission time interval.

7. The apparatus according to claim 1, wherein the second determining unit determines a buffer size of the sidelink destination needing to be contained in the buffer status report of the sidelink according to a buffer status after all medium access control-protocol data units for a sidelink has been built by consuming all the remaining configured sidelink grants when the judgment result of the judging unit is that there exist remaining configured sidelink grants.

8. The apparatus according to claim 1, wherein when the judgment result of the judging unit is that there exist remaining configured sidelink grants, the second determining unit determines the sidelink destination needing to be contained in the buffer status report according to a sidelink destination having still data available for transmission after all the remaining configured sidelink grants are used up, and determines a buffer size of the sidelink destination having data available for transmission according to a buffer status of the sidelink destination having data available for transmission after all medium access control-protocol data units for sidelink has been built by consuming all the remaining configured sidelink grants.

9. The apparatus according to claim 1, wherein the second determining unit determines the sidelink destination needing to be contained in the buffer status report and its buffer size according to a buffer status in the transmission time interval where the buffer status report of the sidelink is transmitted when the judgment result of the judging unit is that there exists no remaining configured sidelink grant.

10. The apparatus according to claim 5, wherein the second determining unit further comprises:
a first data unit generating module configured to determine the size of data that can be transmitted within a whole sidelink control period to which the sidelink grant corresponds according to resources for transmitting data allocated in the sidelink grant after the user equipment decodes and obtains the sidelink grant or at a start time of the sidelink control period to which the sidelink grant corresponds, and generate all the medium access control-protocol data units in the sidelink that can be transmitted in the sidelink control period to which the sidelink grant corresponds according to the size of data that can be transmitted; and
a first determining module configured to, in the transmission time interval, determine the sidelink destination having still data available for transmission in a buffer as the sidelink destination having still data available for transmission.

11. The apparatus according to claim 7, wherein the second determining unit further comprises:
a second data unit generating module configured to determine the size of data that can be transmitted within a whole sidelink control period to which the sidelink grant corresponds according to resources for transmitting data allocated in the sidelink grant after the user equipment decodes and obtains the sidelink grant or at a start time of the sidelink control period to which the sidelink grant corresponds, and generate all the medium access control-protocol data units in the sidelink that can be transmitted in the sidelink control period to which the sidelink grant corresponds according to the size of data that can be transmitted; and
a first calculating module configured to calculate the size of data amount in the buffer in the transmission time interval, and take it as a buffer size of the sidelink destination needing to be contained in the buffer status report.

12. The apparatus according to claim 8, wherein the second determining unit further comprises:
a third data unit generating module configured to determine the size of data that can be transmitted within a whole sidelink control period to which the sidelink grant corresponds according to resources for transmitting data allocated in the sidelink grant after the user equipment decodes and obtains the sidelink grant or at a start time of the sidelink control period to which the sidelink grant corresponds, and generate all the medium access control-protocol data units in the sidelink that can be transmitted in the sidelink control period to which the sidelink grant corresponds according to the size of data that can be transmitted;
a second determining module configured to, in the transmission time interval, determine the sidelink destination having still data available for transmission in a buffer as the sidelink destination having still data available for transmission; and
a second calculating module configured to calculate the size of data amount in the buffer of the sidelink destination having data available for transmission in the transmission time interval, and take it as a buffer size of the sidelink destination having data available for transmission.

13. The apparatus according to claim 5, wherein the second determining unit further comprises:
a third determining module configured to, in the transmission time interval, determine that the sidelink destination having still data available for transmission is a sidelink destination having data available for transmission after excluding all medium access control-protocol data units for sidelink that are assumed to be built by consuming all the remaining configured sidelink grants.

14. The apparatus according to claim 7, wherein the second determining unit further comprises:
a third calculating module configured to, in the transmission time interval, calculate the size of data amount in the buffer after excluding all medium access control-protocol data units for sidelink that are assumed to be built by consuming all the remaining configured sidelink grants, and take it as a buffer size of the sidelink destination needing to be contained in the buffer status report.

15. The apparatus according to claim 8, wherein the second determining unit further comprises:
a fourth determining module configured to, in the transmission time interval, determine that the sidelink destination having still data available for transmission is a sidelink destination having data available for transmission after excluding all medium access control-protocol data units for sidelink that are assumed to be built by consuming all the remaining configured sidelink grants; and
a fourth calculating module configured to, in the transmission time interval, calculate the size of data amount in the buffer of the sidelink destination having data available for transmission after excluding all medium access control-protocol data units for sidelink that are assumed to be built by consuming all the remaining configured sidelink grants, and take it as a buffer size of the sidelink destination having data available for transmission.

16. User equipment, comprising the apparatus for generating a buffer status report as claimed in claim 1.

17. A communication system, comprising the user equipment as claimed in claim 16.
